# EUROPEAN PATENT APPLICATION

(11) **EP 4 678 394 A1**
(43) Date of publication of application: **14.01.2026**
(21) Application number: 24187274.6
(22) Date of filing: 09.07.2024
(51) Int. Cl.: B32B 17/10

(54) **ILLUMINABLE LAMINATED GLAZING**

(71) Applicant: Kuraray Europe GmbH, 65795 Hattersheim am Main (DE)
(72) Inventor: ESCHRICH, Robin, 53840 Troisdorf (DE); LELLIG, Philipp, 50670 Köln (DE)
(74) Representative: Janßen, Christian Oliver

(57) **Abstract**

Described is a laminated glazing comprising more than one functional layer (104a, 104b) with light scattering particles and the use of such glazing especially for roof windows of vehicles.

## Description

Described is a laminated glazing comprising more than one functional layer with light scattering particles and the use of such glazing especially for roof windows of vehicles.

DE 10 2012 109 900 B4 describes illuminable glazing for an automotive sunroof comprising a light guiding layer made with light scattering particles embedded therein or with a physically modified surface.

WO 2021/005162 A1 describes interlayers with light scattering particles printed on the surface of thin polyvinyl butyral films.

Such glazing can be illuminated from the side of the glazing and the light introduced is then scattered by the light scattering particles. This scattered light can be used to illuminate the interior of the vehicle.

While this technology works well in principle, it has its limitations. For example, it only allows for one single colour to be emitted at a given time. Likewise, the pattern of the scattered light is not flexible and depends on the pattern printed or coated onto the one film.

Thus, there is still a need for improved illuminable glazing.

Therefore, one objective of the present invention is a laminated glazing with improved design features and more flexible illumination options. Another objective is an illuminated glazing with lower production costs, raw material costs and/or an improved environmental footprint. Another objective of the present invention is to provide laminated glazing with improved characteristics like an improved thermal stability, improved optical properties like an improved haze, transparency and/or transmissibility.

Accordingly, the present invention concerns a laminated glazing comprising a first sheet of a rigid material (105), a first functional layer (104a) comprising light scattering particles, a first polymer interlayer film (102a), a second functional layer (104b) comprising light scattering particles, and a second sheet of a rigid material (101), in that order.

"In that order" shall mean that the order of the layers in relation to each other is fixed. However, additional layers can be present between these layers as long as the order of the layers described in the embodiment is not changed.

This application addresses the problem of providing a laminated glazing for a roof window of a vehicle that can simultaneously illuminate the vehicle in multiple colours as well as create illuminated areas with different shapes.

The laminated glazing structure enhances light diffusion within the vehicle, providing a uniform distribution of natural light and reducing glare for occupants. The dual layers of light scattering particles increase the overall efficiency of light scattering.

Preferably, the laminated glazing comprises a first sheet of a rigid material (105), a first functional layer (104a) comprising light scattering particles, a first polymer interlayer film (103a) comprising polyvinyl butyral and less than 10 wt% plasticizer, a first polymer interlayer film (102a), a second functional layer (104b) comprising light scattering particles, and a second sheet of a rigid material (101), in that order.

One advantage of using a polyvinyl butyral polymer interlayer film (103a) with very little or no plasticizer is the possibility to generate a film with a particularly smooth surface and thus, a better, homogeneous print image on the smooth side. Furthermore, the rather stiff PVB film 103a can be printed on using new, more economical roll-to-roll processes such as flexographic printing. This is not possible with glass or soft PVB films with higher plasticizer content.

Also preferably, the laminated glazing comprises a first sheet of a rigid material (105), a first functional layer (104a) comprising light scattering particles, a first polymer interlayer film (103a) comprising polyvinyl butyral and less than 10 wt% plasticizer, a first polymer interlayer film (102a),
a second polymer interlayer film (103b) comprising polyvinyl butyral and less than 10 wt% plasticizer, and a second functional layer (104b) comprising light scattering particles, and a second sheet of a rigid material (101), in that order.

In this embodiment, both functional layers can be printed onto the smooth surface of a rather stiff PVB film with little or no plasticizer.

Also preferably, the laminated glazing comprises a first sheet of a rigid material (105), a first functional layer (104a) comprising light scattering particles, a first polymer interlayer film (102a), a second sheet of rigid material (106), a second functional layer (104b) comprising light scattering particles,
a second polymer interlayer film (102b), a third functional layer (104c) comprising light scattering particles on either side of the third sheet of rigid material , and a third sheet of a rigid material (101), in that order.

This embodiment allows the presence of up to three different colours and/or patterns with which the vehicle can be illuminated. In principle, any number of functional layers, i.e. any number of different colours and/or patterns, can be introduced in the glazing using this technology.

Also preferably, the laminated glazing comprises a first sheet of a rigid material (105), a first functional layer (104a) comprising light scattering particles, a first polymer interlayer film (103a) comprising polyvinyl butyral and less than 10 wt% plasticizer, a first polymer interlayer film (102a), a third sheet of rigid material (106), a second polymer interlayer film (102b), a second polymer interlayer film (103b) comprising polyvinyl butyral and less than 10 wt% plasticizer, a second functional layer (104b) comprising light scattering particles, in that order, and a third functional layer (104c) comprising light scattering particles and optionally, a third polymer interlayer film (103b) comprising polyvinyl butyral and less than 10 wt% plasticizer, on either side of the third sheet of rigid material.

Also preferably, the laminated glazing further comprises an optical separation layer (107) and/or a coloured layer (108) on the inside surface of the first rigid sheet (105).

Depending on the location where the final glazing is used, e.g. in case of an automotive sunroof, the rigid layer (105), which faces the sun, may often be tinted in order to reduce the solar energy which is transmitted through the laminate into the vehicle. Thus, an optical separation layer (107) may be used between the optionally tinted rigid layer (105) and the light source in order to reduce the amounts of the light which enters rigid layer (105), where it would be absorbed and lost for the purpose of illumination.

The optical separation layer (107) may consist of any medium which is capable of preventing major amounts of light entering the rigid layer. As regular lamination interlayers have a similar refractive index as the clear glass sheets usually used as rigid layer these are not well suited as optical separation layer (107). Hence, the refractive index of the optical separation layer (107) has to be significantly lower. The lower the refractive index of optical separation layer (107), the more efficient the light guiding and the lighting will be. Suited materials show sufficient adhesion, cohesion and mechanical strength to enable a firm bond between the neighbouring layers. Suitable material include a polymer or inorganic materials or composites of these. Furthermore, the low refractive index layer may consist of a nanoscale, porous material, which enables to incorporate low refractive index fluids in its pores.

In another configuration, the low refractive index layer can also be chosen to be a simple gap filled by air or another gas in a similar fashion as is the case in common insulating glass units. In another embodiment, the gap may be chosen to be left unfilled, thus providing a vacuum in a similar fashion as for vacuum insulating glasses. In this latter case, the gap needs to be held open and prevented from collapsing by tiny spacers in form of printed on dots which preferably are made from a non-transparent, preferably white material.

Also preferably, the laminated glazing further comprises a light source (109) and an optical connector (110) in contact with each sheet of rigid material. The light source (109) can also emit the light through hole in the rigid material and/or be guided into the glazing by means of optical elements, e.g. prisms. he optical connector (110), which is a transparent, optically clear material with low light absorption, may form a permanent bond between the light source (109) and the light guiding layers, e.g. by means of physical and/or chemical curing, optical clear adhesive. Alternatively, by a positive-fit or force-fit connection. The latter options allows for an improved maintainability, e.g. change of the light source. Materials which are suited for positive-fit or force-fit materials are optically clear polymers, especially elastomers. The light source may be any conventional light source, preferably it is an LED light source.

### Brief description of the drawings

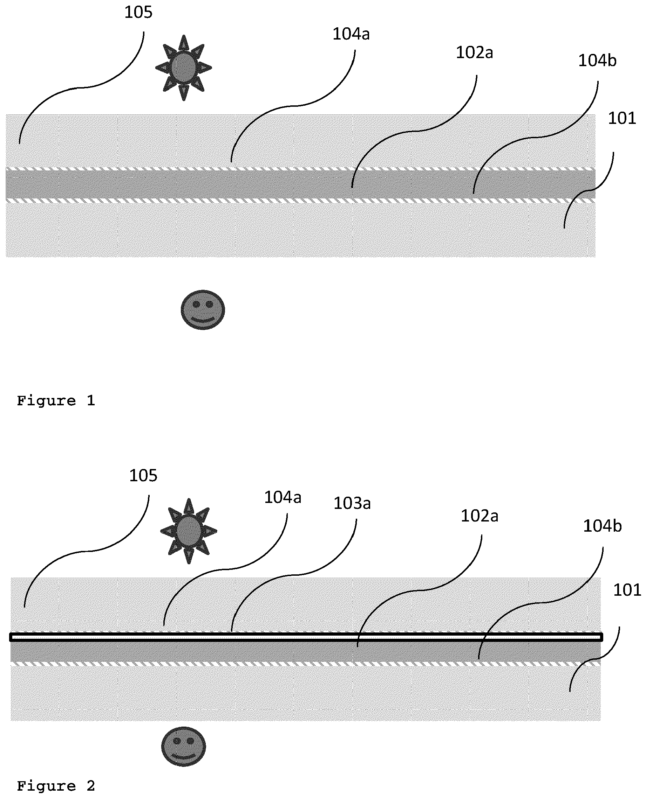

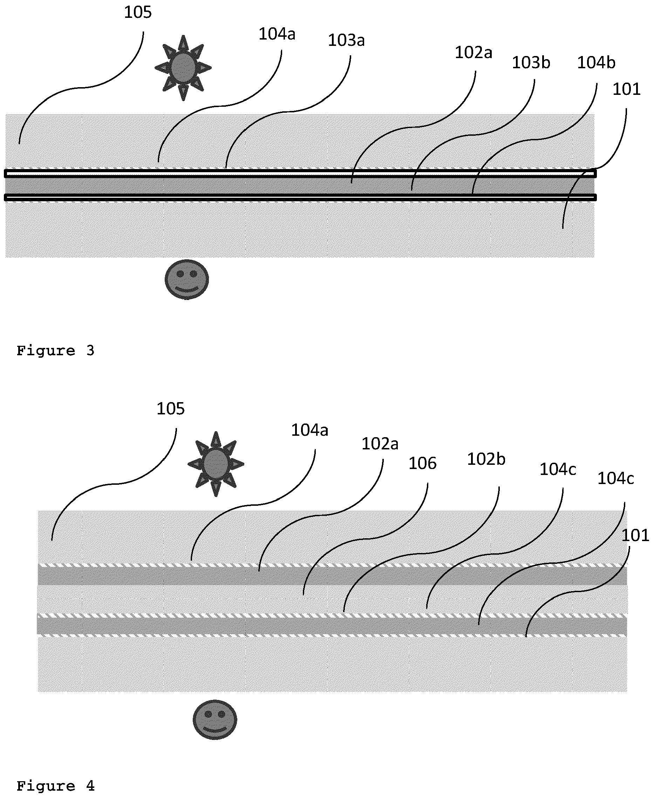

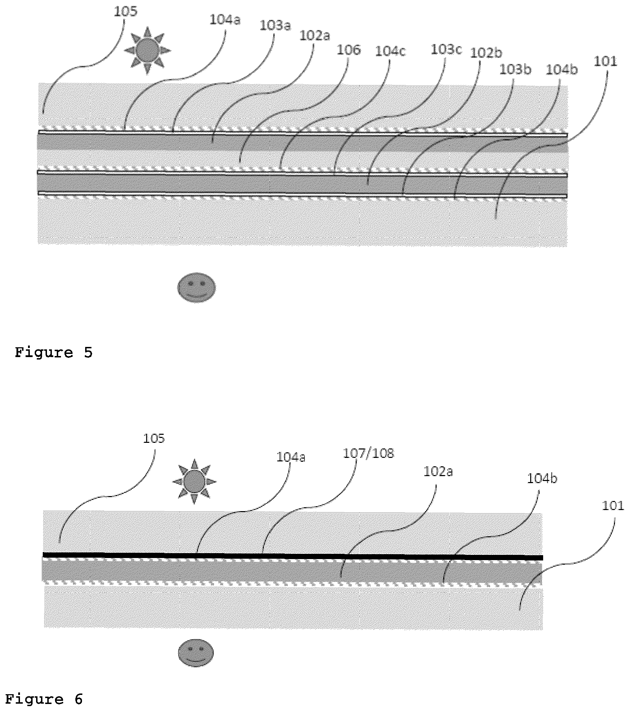

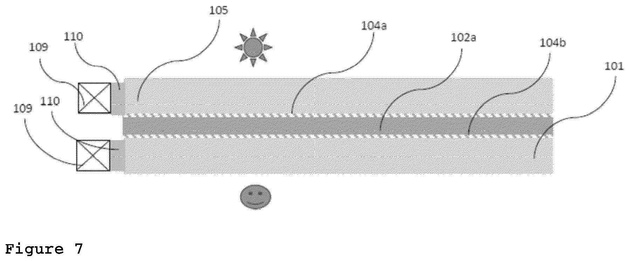

Figures 1 to 7 illustrate an embodiment of the laminated glass structure of the invention according to claims 1 to 7, respectively
Preferably, the polymer interlayer films (102) each independently comprise homo- or copolymers of (meth)acrylates, poly(vinyl) acetals, ionomers like ethylene methacrylic acid copolymers, nitro cellulose, polystyrenes, thermoplastic polyurethane, polycarbonates, polyvinyl chloride, polyolefines like polyethylene or polypropylene, polyethylene terephthalate, ethylene-vinyl acetate or mixtures thereof.

Most preferably, the polymer interlayer films (102) each comprise polyvinyl butyral and more than 22 wt% of plasticizer.

Preferably, the rigid material is a rigid polymer like PET, polycarbonate or PMMA. However, most preferably the rigid material is glass.

The light scattering particle are typically applied to the at least one surface of the polymer interlayer films by means of a coating or printing process. In case of printing, they can be applied via techniques that are commonly known in the printing industry such as offset printing, rotogravure printing, flexography, screen-printing and inkjet printing, especially digital printing.

For forming the functional layer, a printing ink, consisting of 0.40 % by weight titanium dioxide (as light scattering particles) with a particle size D50 of 0.15 um determined by laser diffraction method according to DIN 13320, 27.0 % by weight of poly(methyl methacrylate) (PMMA) (as matrix material) and 36.3 % by weight of 2-butoxyethanol acetate and 36.3 % by weight of cyclohexanone (as sacrificial solvents), is most preferable chosen.

The thickness of the functional layer (104) is preferably 0.1 um to 100 um, more preferably 1.0 um to 20 µm before lamination.

The functional layer (104) preferably comprises the light scattering particles and at least one matrix material. Suitable matrix materials include polymers in which the light scattering particles can be homogenously dispersed without decomposition. Preferably, the matrix material comprises homo- or copolymers of (meth)acrylate, methyl methacrylate, poly(vinyl) acetal, nitro cellulose, polystyrene, poly vinyl alcohol, polyurethane, poly carbonate and polyvinyl chloride. Most preferably, the matrix material is polyvinyl butyral.

Further components might be present in the functional layer (104) . Examples of further components include co-resins, solvents, UV absorber, UV-stabilizer, cross-linker, curing agents, accelerants, photo-initiators, surfactants, stabilizers, filler, thixotropic modifiers and plasticizers.

Light scattering materials known in the art can be employed. Preferably, the light scattering particles are chosen from the group consisting of TiO₂, ZnO, Al₂O₃, ZrO₂, PbSO₄, BaSO₄, CaCO₃, glass, polymers and mixtures thereof. The light scattering particles can be used as solid or hollow beads or fibres.

Preferably, the light scattering particles are present in the functional layers (104) in an amount of 0.1 to 10 % by weight, more preferred 0.5 to 5 % by weight, most preferably 1 to 2.5 % by weight.

Also preferably, the light scattering particles have a median particle size D50 by volume determined by the laser diffraction method according to DIN 13320 of equal to or more than 0.001, more preferably 0.01 µm, 0.05 µm or 0.1 µm. Also preferably they are equal to or less than 10.0 µm, more preferably 5.0 µm and most preferably 1.0 um. Preferably, the median particle size by volume determined by the laser diffraction method according to DIN 13320 is equal to or more than 0.01 um and equal to or less than 1.0 um.

Preferably, the light scattering particles are present in the functional layers (104) in form of a concentration gradient, i.e. concentration of functional particles in the functional layers (104) varies depending on the distance to the light source. More preferably, the concentration of light scattering particles in the functional layers (104) increases with an increasing distance to the nearest light source.

Preferably, the functional layers (104) covers only part of the polymer interlayer films. Thus, the functional layers (104) can be applied in form of different patterns and illumination in form of certain patterns in various colours at the same time can be achieved, which is not possible in case the light scattering particles are evenly dispensed in the laminate. Thus, preferably, the functional layers (104) covers equal to or less than 90%, 80%, 75% and most preferably less than 50% of the at least one surface of the polymer interlayer films. This embodiment is especially useful for informative and/or decorative glazing for aircrafts, trains or ships and for use in the construction area, especially for shop windows, elevators or facade glazing.

The thickness of the functional layer is preferably from 0.1 to 50 µm, more preferably, from 1 to 30 µm, most preferably from 2 to 20 µm as measured by IR microscopy.

The term "before lamination" shall denote the state of the film before it is brought into contact with any of the other components of the present laminated glazing.

In case of polyvinyl butyral, the films are generally produced by extrusion with use of a cast-film line or in the form of a blown film. Here, a surface roughness may also be produced by controlled melt fracture or with the cast-film method additionally by use of a structured chill roll and/or structure back roll. Preferably, the at least one surface of polymer interlayer films (103) have a roughness Rz of equal to or less than 10 um before lamination measured in accordance with EN ISO 4287. The polymer interlayer films (103) used in accordance with the invention preferably has a one-sided surface structure with a roughness Rz of less than 25 µm, preferably from 0.1 to 10 µm, more preferably Rz from 1 to 5 µm. This smooth surface ensures that light scattering particles can be applied to the surface of polymer interlayer films (103) in a very homogenous manner leading to a high quality optical pattern of the illuminated glazing.

Preferably, the polymer interlayer films (103) have a thickness of equal to or more than 10 µm to equal to or less than 250 µm before lamination, more preferably 15 to 150 µm, most preferably 20 to 100 um, also preferably 40 to 100 um and at specifically 30 to 50 um. This range of thickness does not include additional coating on the film. It is especially preferred for these thin polymer interlayer films to have the low or no content of plasticizer or even no plasticizer as described earlier to avoid sticking issues and to exhibit the required rigidity to print on and handle such thin films.

Such thin and low-plasticizer containing films can be prepared as described in WO 2022/063962 A1.

Suitable plasticizers include one or more compounds selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids;
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

Particularly preferred are 1,2-cyclohexane dicarboxylic acid diisononyl ester (DINCH) or triethylene glycol-bis-2-ethyl hexanoate (3GO or 3G8).

In addition, the polymer interlayer films may contain further additives, such as residual quantities of water, UV absorber, antioxidants, adhesion regulators, optical brighteners or fluorescent additives, stabilisers, colorants, processing aids, inorganic or organic nanoparticles, pyrogenic silicic acid and/or surface active substances.

The thickness of each of the individual polymer interlayer films (102) before lamination is preferably 250 to 2500 um, more preferably 300 to 1600 µm, more preferably 380 - 1200 um and most preferably 600 to 900 um.

Polymer interlayer films (102), especially polyvinyl butyral films, are well-known in the art and can be obtained commercially.

A second aspect of the present invention is the use of the laminated glass according to the present invention as a roof window for a vehicle to simultaneously illuminate the vehicle in equal to or more than two colours and/or to create an illuminated roof window with illuminated areas with two or more different shapes

The rigid layers (101,105) and the various interlayer films can be laminated by any known lamination technique known in the art.

## Claims

**1.** Laminated glazing comprising
a first sheet of a rigid material (105),
a first functional layer (104a) comprising light scattering particles,
a first polymer interlayer film (102a),
a second functional layer (104b) comprising light scattering particles, and
a second sheet of a rigid material (101),
in that order.

**2.** The laminated glazing according to claim 1 comprising
a first sheet of a rigid material (105),
a first functional layer (104a) comprising light scattering particles,
a first polymer interlayer film (103a) comprising polyvinyl butyral and less than 10 wt% plasticizer,
a first polymer interlayer film (102a),
a second functional layer (104b) comprising light scattering particles, and
a second sheet of a rigid material (101),
in that order.

**3.** The laminated glazing according to claim 1 comprising a first sheet of a rigid material (105),
a first functional layer (104a) comprising light scattering particles,
a first polymer interlayer film (103a) comprising polyvinyl butyral and less than 10 wt% plasticizer,
a first polymer interlayer film (102a),
a second polymer interlayer film (103b) comprising polyvinyl butyral and less than 10 wt% plasticizer, and
a second functional layer (104b) comprising light scattering particles,
and
a second sheet of a rigid material (101),
in that order.4. The laminated glazing according to claim 1 comprising
a first sheet of a rigid material (105),
a first functional layer (104a) comprising light scattering particles,
a first polymer interlayer film (102a),
a second sheet of rigid material (106),
a second functional layer (104b) comprising light scattering particles,
a second polymer interlayer film (102b),
a third functional layer (104c) comprising light scattering particles on either side of the third sheet of rigid material , and
a third sheet of a rigid material (101),
in that order.

**5.** The laminated glazing according to claim 1 comprising
a first sheet of a rigid material (105),
a first functional layer (104a) comprising light scattering particles,
a first polymer interlayer film (103a) comprising polyvinyl butyral and less than 10 wt% plasticizer,
a first polymer interlayer film (102a),
a third sheet of rigid material (106),
a second polymer interlayer film (102b),
a second polymer interlayer film (103b) comprising polyvinyl butyral and less than 10 wt% plasticizer,
a second functional layer (104b) comprising light scattering particles,
in that order, and
a third functional layer (104c) comprising light scattering particles and optionally, a third polymer interlayer film (103b) comprising polyvinyl butyral and less than 10 wt% plasticizer, on either side of the third sheet of rigid material.

**6.** The laminated glazing according to any one of the claims above further comprising an optical separation layer (107) and/or a coloured layer (108) on the inside surface of the first rigid sheet (105).

**7.** The laminated glazing according to any one of the claims above further comprising a light source (109) and an optical connector (110) in contact with each sheet of rigid material.

**8.** The laminated glazing according to any one of the claims above wherein the polymer interlayer films (102) each independently comprise homo- or copolymers of (meth)acrylates, poly(vinyl) acetals, ionomers like ethylene methacrylic acid copolymers, nitro cellulose, polystyrenes, thermoplastic polyurethane, polycarbonates, polyvinyl chloride, polyolefines like polyethylene or polypropylene, polyethylene terephthalate, ethylene-vinyl acetate or mixtures thereof.

**9.** The laminated glazing according to claim 8 wherein the polymer interlayer films (102) each comprise polyvinyl butyral and more than 22 wt% of plasticizer.

**10.** The laminated glazing according to any one of the claims above wherein the rigid material is glass.

**11.** The laminated glazing according to any one of the claims above wherein the light scattering particles are chosen from the group consisting of TiO₂, ZnO, Al₂O₃, ZrO₂, PbSO₄, BaSO₄, CaCO₃, glass, polymers and mixtures thereof.

**12.** The laminated glazing according to any one of the claims above wherein the polymer interlayer films (103) each have a thickness of equal to or more than 10 µm to equal to or less than 100 µm before lamination.

**13.** The laminated glazing according to any one of the claims above wherein the functional layers (104) each comprise light scattering particles and a binder and are printed or coated onto the surface of the respective polymer interlayer films (102) or (103) .

**14.** The laminated glazing according to any one of the claims above wherein the functional layers (104) each are printed onto the polymer interlayer films (103) by means of a digital printing process.

**15.** Use of the laminated glass according to any one of the claims above as a roof window for a vehicle to simultaneously illuminate the vehicle in equal to or more than two colours and/or to create an illuminated roof window with illuminated areas with two or more different shapes.
